# NEUE EUROPÄISCHE PATENTSCHRIFT

(11) **EP 1 346 116 B2**
(45) Veröffentlichungstag und Bekanntmachung des Hinweises auf die Entscheidung über den Einspruch: **29.12.2010**
(45) Hinweis auf die Patenterteilung: 29.11.2006
(21) Anmeldenummer: 01980510.0
(22) Anmeldetag: 23.10.2001
(51) Int. Cl.: E04F 13/00, E04F 15/02, E04F 15/20, B32B 27/32, B32B 27/30

(54) **SCHALLSCHUTZ-VERBUNDSYSTEM FÜR RAUMBEGRENZUNGSFLÄCHEN**
SOUND-PROOF COMPOSITE SYSTEM FOR SPACE LIMITING SURFACES
SYSTEME COMPOSITE D'ISOLATION ACOUSTIQUE POUR SURFACES DE LIMITATION D'ESPACES

(30) Priorität: 29.12.2000 EP 00128689; 24.07.2001 EP 01117926
(43) Veröffentlichungstag der Anmeldung: 24.09.2003
(73) Patentinhaber: WPT GmbH Windmöller Polymer Technologie, 32756 Detmold (DE)
(72) Erfinder: Elsässer, Manfred, 6082 Patsch (AT)
(74) Vertreter: Bogensberger, Burkhard
(86) Internationale Anmeldenummer: PCT/EP2001/012231
(87) Internationale Veröffentlichungsnummer: WO 2002/053858

(56) Entgegenhaltungen:
- EP-A- 0 391 210
- EP-A- 0 653 527
- EP-A- 1 113 122
- EP-A1- 1 113 123
- EP-A2- 0 864 712
- WO-A1-00//76765
- DE-A- 4 411 453
- DE-A1- 2 841 208
- DE-A1- 4 409 125
- DE-U1- 29 908 733
- FR-A- 2 372 942

## Beschreibung

Aus der Bauphysik ist bekannt, dass sich im Bauwesen ausreichender Trittschallschutz von Trennbauteilen bei gleichzeitig realistischen Bauteilmassen nur durch mehrschalige - in der Regel zweischalige - Bauteile oder durch die Kombination schwerer einschaliger Trenndecken mit weichfedernden Gehbelägen erreichen lässt. Zweischalige Trenndecken sind im allgemeinen in Form von schwimmenden Estrichen ausgeführt und bedingen daher in der Regel relativ grosse Konstruktionshöhen, die insbesondere in der Altbausanierung mit meist vorgegebenen Anschlusshöhen praktisch kaum realisierbar sind. Bei der Berechnung des für den Mindest-Trittschallschutz des Gesamtaufbaus erforderlichen Trittschall-Verbesserungsmasses VM_{erf} mehrschichtiger Deckenauflagen dürfen weichfedernde Gehbeläge nicht in allen europäischen Ländern herangezogen werden. Sie sind ausserdem teilweise für den Einsatz insbesondere in Nassbereichen (Bädern) ungeeignet oder nicht akzeptabel.

In letzter Zeit kommen hingegen immer mehr relativ dünne, steife Bodenbeläge und Wandverkleidungen zum Einsatz, z.B. aus Holz- bzw. Press-Spanplatten in Dielenformaten mit extrem harten Oberflächen, z.B. auch aus Kunststoff-Laminaten. Das Verhalten dieser - einschalig wirkenden - Boden- bzw. Wandbeläge ist in besonderem Masse hinsichtlich der Schallabstrahlung in den begangenen Raum selbst kritisch und subjektiv unangenehm.

Bodendielen, die unmittelbar auf einer Rohdecke aufgeklebt werden, bieten zwar hinsichtlich der Schallabstrahlung in den Raum die günstigsten Voraussetzungen, tragen damit aber zur Trittschalldämmung kaum etwas bei, so dass ihre Verlegung in der Baupraxis (zumindest in den DACH-Ländern Deutschland, Österreich und Schweiz) auf schwimmenden Estrichen erforderlich ist.

Kombinationen des Stands der Technik aus meist mehreren Schichten zur Verwendung unter oder in Verbindung mit Verkleidungen oder Bodenbelägen werden beispielsweise in den Dokumenten DE 197 22 513, DE 298 09 767 U, CH 645 150, EP 1 001 111, EP 0 864 712 oder DE 196 37 142 geoffenbart.
Auch EP 0 653 527 beschreibt ein Verbundsystem zur Trittschalldämmung bestehend aus zwei Polyesteraussenlagen mit einer dazwischenliegenden, speziellen Polymerschicht, welche vorzugsweise ohne Weichmacherzusätze auskommt und die Schalldämmung nicht über luftgefüllte Hohlräume sondern über die molekulare Struktur der Polymerschicht erzielt. EP 0 391 210 wiederum beschreibt ein Verbundelement mit einer inneren Platte aus Hartschaumstoff und wenigstens einer damit verbundenen äusseren Deckschicht, zu der eine dünne Holzwerkstoffplatte mit Dekor gehört. FR 2 372 942 beschreibt ein Schallschutzsystem bestehend aus zwei Aussenlagen aus kompakten Kunststoff, z.B. PVC, und einer Innenlage aus PVC, PU oder retikuliertem PU mit einer Dichte von 0,5.

EP 1 113 122 berichtet von einem zweischaligen Schallschutzverbundsystem, bestehend aus einer Bedämpfungsschicht für eine Boden-, Wand- oder Deckenverkleidung und einer an die Bedämpfungsschicht anschliessenden Trittschalldämmschicht, wobei die Bedämpfungsschicht bevorzugt eine Dichte von mehr als 1600 kg/m3 aufweist und die Trittschalldämmschicht eine dynamische Steifigkeit von 20 MN/m3 nicht überschreitet. DE 4411453 wiederum offenbart ein zwei bis dreischaliges Verbundsystem in Form eines Feder-Masse oder eines Feder-Masse-Feder-Systems, wobei die Masseschicht mineralische Füllstoffe und Bindemittel enthält und eine Dichte im Bereich von 1 - 2,5 g/cm3 aufweist.

Aus der europäischen Patentanmeldung Nr. 01117926.4, die für die Frage der erfinderischen Tätigkeit jedoch nicht von Bedeutung ist, ist ein Schallschutzverbundsystem bekannt, das durch eine geeignete spezifische Kombination von Biegeverlustfaktor tan δ_{f} und einachsigem Dehnverlustfaktor tan δ_{c} in den Schichten eines Schallschutz-verbundsystems auch dynamische Steifigkeiten jenseits des Wertes von 50 MN/m³ und damit geringe Schichtdicken ermöglicht. Allerdings wird für dieses Schallschutzsystem eine Dichte der Dämpfungsschicht oberhalb von 1600 kg/m³ gefordert.

Geeignete Materialien für solche Dämpfungsschichten mit einer geringeren Dichte als 1600 kg/m³ stehen beispielsweise in Form von modifizierten Polyolefinen (elastische Komponenten mit teilweise klebrigen Oberflächen) oder Weich-PVC (nicht-klebrige elastische Komponente) zur Verfügung.

Derzeit bereits großtechnisch zum Einsatz kommende Polyolefine, sind Polyäthylen (PE) und Polypropylen (PP).

Die Modifikation dieser Polyolefine zur Erzielung eines weicheren, Elastomeren ähnlichen Charakters kann grundsätzlich über zwei Wege erfolgen, nämlich entweder mittels Copolymerisation oder durch den Einsatz metallocener Katalysatoren, die eine wesentlich genauere Steuerung der Polymerisation erlauben und so erst die Produktion von Polyolefin-Folien (m-PE, m-PP) mit kleinen Dichten (bei z.B. m-VLDPE, PP kleiner als 900 kg/m³) ermöglichen.

Die Modifikation von Polyolefinen,durch Copolymerisation kann mit Hilfe von
- Vinylacetat, Methyl-/ Äthyl-/ Butyl- oder Isobutylacrylat bzw. mit
- Blockcopolymeren auf Äthylen-/ Propylenbasis oder
- Comonomeren auf Ethylenocten-Basis
erfolgen.

Allerdings besitzen modifizierte Polyolefine, insbesondere bei hohen Anteilen der Comonomeren das Problem des unerwünschten Haftens und PVC muss zur Erreichung der notwendigen Flexibilität mit Weichmachern versetzt werden, die grundsätzlich das Problem einer Migration aus dem Basismaterial in angrenzende Schichten in sich tragen. Für beide Materialien besteht somit eine aus dem Kontakt mit angrenzenden Flächen bzw. Materialien resultierende Problematik.

Der Erfindung liegt die Aufgabe zugrunde, eine Verwendbarkeit von Folien aus entweder Very Low Density-Polyolefinen (m-VLDPE,PP), also Polyolefinen mit sehr niedriger Dichte, vorzugsweise zwischen 800 kg/m³ bis 900 kg/m³ bzw. aus Materialien mit einem höherprozentigen Comonomerenanteil von vorzugsweise 12 Mol-% bis 40 Mol-% oder Materialien mit Weichmacherzugaben als Bestandteil einer Dämpfungsschicht zu ermöglichen und damit insbesondere die für den Dichtebereich unterhalb von 1600 kg/m³ verwendbaren Materialien zu ergänzen.

Diese Aufgaben werden erfindungsgemäss durch die kennzeichnenden Merkmale des Anspruchs 1 gelöst. Vorteilhafte und alternative Ausgestaltungen und Weiterbildungen ergeben sich aus den Merkmalen der Unteransprüche.

Der Erfindung liegt die Idee zugrunde, eine Dämpfungsschicht, aus entweder modifizierten Polyolefinen (z. B. Very Low Density-Polyethylen (m-VLDPE) bzw. Materialien mit einem zur Erzielung der angestrebten Eigenschaften mindest erforderlichen höherprozentigen Anteil an Comonomeren (vorzugsweise 12 Mol-% bis 40 Mol-%) oder einem weichmacherhaltigen Werkstoff zu bilden, deren Kontakt zu angrenzenden Materialien durch einen speziellen Aufbau der Dämpfungsschicht definiert wird. Dabei ist die Kern-Komponente, die z.B. aus den weichen und klebrigen modifizierten Polyolefinen oder aus nicht klebrigen elastischen Weich-PVC-Materialien besteht, mittels beidseitiger Beschichtung durch Deck-/Siegelschichten geschützt (z.B. gegen Abrasion oder Weichmachermigrationen). Je nach angrenzendem Material kann unter Umständen auf eine der beiden Deck-/Siegelschichten (aus z.B. Polypropylen (PP), Polyethylen (PE), Polyethylenterephtalat (PET) oder Polyamid (PA)) oder auf einen Barrierewerkstoff verzichtet werden, da deren Funktion beispielsweise durch die Oberfläche der Bodendiele bereitgestellt werden kann.

In Abhängigkeit von der spezifischen Anwendung kann diese Dämpfungsschicht beispielsweise ein schwimmender Verbund aus den mindestens drei Schichten
- Schutzschicht,
- Blockschicht aus einem elastischen Polyolefin,
- Schutzschicht,
oder
- Schutzschicht/Barrierewerkstoff,
- weichmacherhaltiges Material,
- Schutzschicht/Barrierewerkstoff,
sein, die vorzugsweise auch als koextrudierte Folienbahn ausgebildet werden und durch weitere Schichten aus speziellen Werkstoffen ergänzt und optimiert werden kann.

In diesem Beispiel kann der schwimmende Verbund für eine sogenannte "verblockte" Folie im Coex-Blasverfahren erzeugt werden. Dabei bewirkt eine speziell gewählte, klebrige innere Schicht nach dem Zusammendrücken bzw. Flachlegen des ausgeblasenen Schlauchs ein Verkleben der Folienschichten.

Die Dämpfungsschicht kann somit aus einer Vielzahl von Lagen, z.B. bis zu vierzehn koextrudierten Schichten, gebildet sein, so dass diese je nach Zusammensetzung ihrer Schichten an vielfältige Einsatzzwecke angepasst werden kann. So können beispielsweise eingefärbte, UVstabilisierte, antistatische, weitere diffusionshemmende oder besonders siegelfeste Schichten zum Einsatz kommen. Zur Erzielung hoher Dichtheit und einer zuverlässigen Verhinderung der Migration von Weichmachern hat es sich als besonders vorteilhaft erwiesen, wenn es sich bei den Schutzschichten um PP, PE, PET oder PA und dem Barrierewerkstoff um ein Ethylen-Vinylalkohol-Kopolymerisat (EVOH) oder um Polyvinylidenchlorid (PVDC) handelt, da in diesem Fall die Permeabilität selbst für gasförmige Stoffe und mithin die Gefahr der Diffusion um etwa 90 % reduziert wird.

Allgemeine Beispiele für Folien aus extrudierten Mikroschichten mit Barrierewerkstoffen sind aus der Anmeldung WO 00/76765 bekannt.

Das erfindungsgemässe Schallschutz-Verbundsystem ist nicht nur für Bodenbeläge, z.B. aus Press-Spanplatten, einsetzbar, sondern prinzipiell auch für Wand- und Deckenbeläge, sowie für alle Fussbodenaufbauten ohne schwimmenden Estrich, insbesondere solche mit lastverteilenden Gehbelägen, anwendbar.

Die Erfindung wird anhand der beiliegenden Zeichnung beispielhaft näher erläutert. Die dargestellten Ausführungsformen betreffen rein beispielhaft die Verwendung einer Schicht aus weichmacherhaltigem Werkstoff, können aber auch hinsichtlich der Verwendung anderer Materialien, wie z.B. modifizierter Polyolefine, als Beschreibung dienen. Es zeigen im einzelnen
- Fig.1: die schematische Darstellung einzelner Komponenten eines erfindungsgemässen Schallschutz-Verbundsystems;
- Fig.2: eine auf einer Raumbegrenzungsfläche aufgebrachte erfindungsgemässe Dämpfungsschicht;
- Fig.3: die schematische Darstellung des erfindungsgemässen Aufbaus der Dämpfungsschicht;
- Fig.4: die einzelnen Komponenten eines erfindungsgemässen Schallschutz-Verbundsystems mit Trittschalldämmschicht und
- Fig.5: ein auf einer Raumbegrenzungsfläche aufgebrachtes erfindungsgemässes Schallschutz-Verbundsystem mit Trittschalldämmschicht.

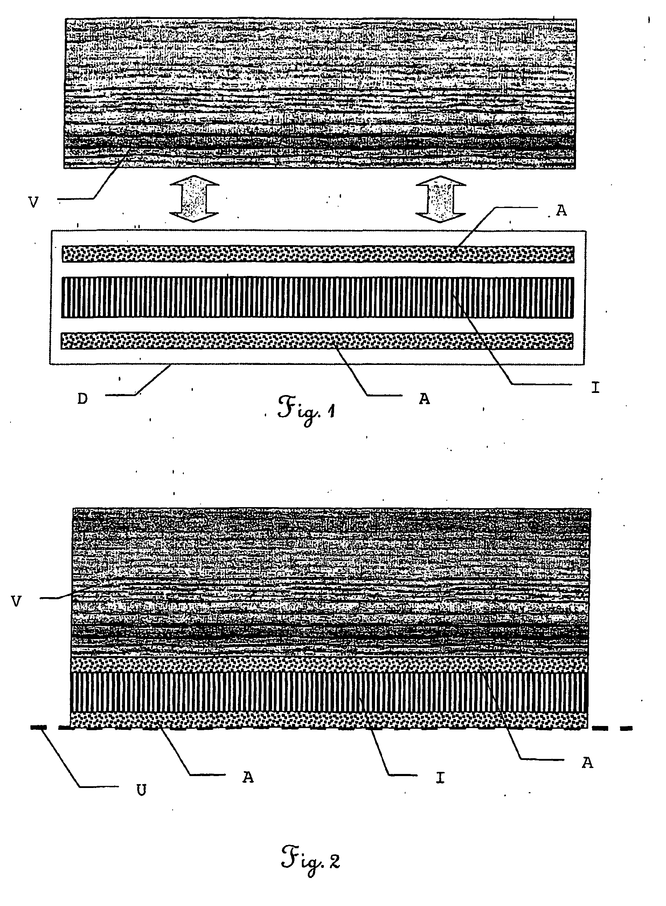

In Fig.1 sind einzelne Komponenten eines erfindungsgemässen Schallschutz-Verbundsystems schematisch dargestellt. Auf einer Seite einer Verkleidungsschicht V, die hier rein beispielhaft als Vollholzdiele ausgebildet ist, wird eine Dämpfungsschicht D aufgebracht, z.B. durch vollflächige Verklebung. Die Dämpfungsschicht D besteht aus einer inneren Folienbahn I, die zwischen zwei äusseren Folienbahnen A eingebracht ist. Grundsätzlich können zur Erzielung weiterer, spezieller Eigenschaften der Dämpfungsschicht D über diesen Schichtaufbau hinaus auch weitere Folienbahnen hinzugefügt werden.

Fig.2 zeigt exemplarisch die auf eine Raumbegrenzungsfläche U aufgebrachte Dämpfungsschicht. Die Raumbegrenzungs-fläche kann dabei sowohl eine Fussboden- als auch eine Decken- oder Wandfläche sein. Zwischen dieser Raumbegrenzungsfläche und der Verkleidungsschicht V befindet sich eine durch zwei äussere Folienbahn A eingeschlossene innere Folienbahn I.

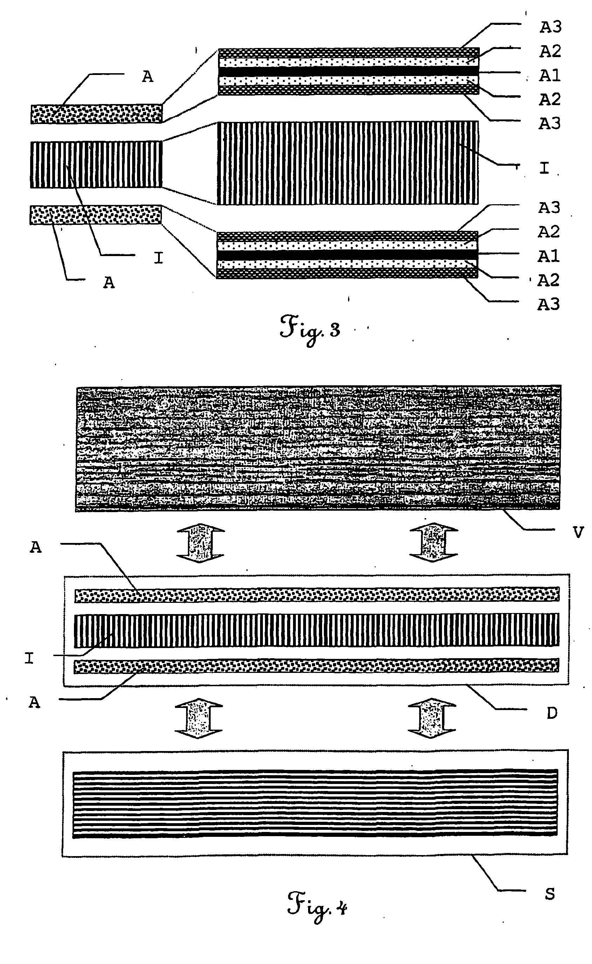

Den detaillierten Schichtaufbau der Dämpfungsschicht D zeigt Fig.3. Die beiden äusseren Folienbahnen A bestehen in diesem Beispiel aus jeweils 5 miteinander verbundenen Schichten, z.B. als Coex-Blasfolie. Eine innerste Schicht aus Barrierewerkstoff A1 wird durch zwei haftverbessernde und/oder lastverteilende Schichten A2 eingeschlossen. Die Aussenlagen bestehen aus zwei äusseren Schichten A3, die beispielsweise aus einem verschweissbaren Werkstoff bestehen. Je nach verwendetem Werkstoff kann unter Umständen die Funktionalität von zwei Schichten zusammengefasst werden. So kann gegebenenfalls auf die haftverbessernde und/oder lastverteilende Schichten A2 verzichtet werden, wenn durch die direkte Verbindung von äusserer Schicht A3 und Barrierewerkstoff A1 bereits die gewünschten Eigenschaften realisiert werden können. Als geeignete Schutzschichten oder Barrierewerkstoffe, die eine Migration von mono- oder polymeren Weichmachern unterbinden, haben sich PP, PE, PET oder PA und insbesondere Ethylen-Vinylalkohol-Kopolymerisat (EVOH) oder Polyvinylidenchlorid (PVDC) erwiesen. Als haftverbessernde und/oder lastverteilende Schicht kann beispielsweise Polyamid (PA) oder als Haftvermittler ein geeigneter Kleber verwendet werden.

Grundsätzlich können die beiden äusseren Schichten A auch in ihrem inneren Aufbau voneinander abweichen, so dass ein insgesamt asymmetrischer Aufbau der Dämpfungsschicht resultiert. Dies kann z.B. vorteilhaft sein, wenn den besonderen chemischen oder physikalischen Eigenschaften der Oberflächen von Raumbegrenzungsfläche, Verkleidungsschicht oder weiterer, einzubringender Schichten Rechnung getragen werden soll.

In Fig.4 wird die Verwendung einer solchen weiteren, einzubringenden Schicht dargestellt. Auf die der Verkleidungsschicht V abgewandten Seite der Dämpfungsschicht D, die wiederum aus einer inneren Folienbahn I und zwei äusseren Folienbahnen A besteht, wird eine zusätzliche Trittschalldämmschicht S aufgebracht. Die Verbindung kann beispielsweise durch vollflächiges Verkleben erfolgen, die Kombination aus Verkleidungs- und Dämpfungsschicht kann aber auch auf der Trittschalldämmschicht aufgelegt sein. Durch eine aufeinander abgestimmte Optimierung der Materialparameter des nun zweilagigen Schallschutz-Systems kann dessen Gesamtverhalten den jeweiligen Bedingungen angepasst werden. So kann beispielsweise durch eine geeignete Kombination von Biegeverlustfaktor der Dämpfungsschicht sowie einachsigem Dehnverlustfaktor und dynamischer Steifigkeit der Trittschalldämmschicht S zusätzlich zur wesentlichen Verbesserung des Abstrahlverhaltens der Verkleidungsschicht V bezüglich der Schallabstrahlung in den Raum auch ein hochwertiger Trittschallschutz erreicht werden, wobei geringe Schichtdicken des Gesamtsystems auch mit überraschend hohen dynamischen Steifigkeiten erlaubt, sind.

Dies kann beispielsweise erreicht werden, indem für die innere Folienbahn I ein Biegeverlustfaktor tan δ_{f} ≥ 0,08 und für die Trittschalldämmschicht S entweder ein einachsiger Dehnverlustfaktor tan δ_{c} < 0,17 zusammen mit einer dynamischen Steifigkeit s' < 30MN/m³ oder ein einachsiger "Dehnverlustfaktor tan δ_{c} ≥ 0,17 zusammen mit einer dynamischen Steifigkeit von s' ≥ 30 MN/m³ gewählt werden.

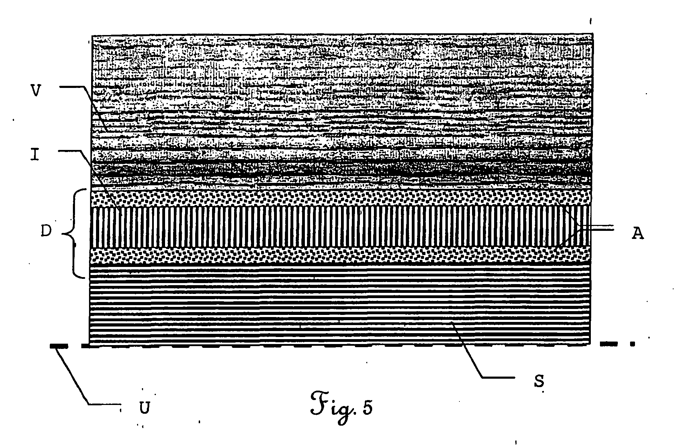

Fig.5 stellt schematisch das auf eine Raumbegrenzungsfläche U aufgebrachte Schallschutz-Verbundsystem dar. Zwischen die Verkleidungsschicht und der darauf befindlichen Dämpfungsschicht D, bestehend aus innerer Folienbahn I und äusseren Folienbahnen A, und der Raumbegrenzungsfläche U ist eine zusätzliche Trittschalldämmschicht S eingebracht.

Die aus Fig.1 - Fig.5 ersichtlichen Dickenverhältnisse sind nicht einschränkend zu verstehen. So kann z.B. die Verkleidungsschicht V dünner (z.B. als 5 mm dicke Hartfaserplatte oder als Laminatschicht, solange sie nur lastverteilend wirkt) oder dicker als die Dämpfungsschicht D ausgebildet sein. Wird eine relativ dünne Verkleidungsschicht V gewählt, so wird die Dämpfungsschicht D als (wesentlich dickere) Tragschicht ausgebildet, die durch die spezielle Auswahl von Zuschlagstoffen hinsichtlich zu erzielender Eigenschaften optimiert werden kann.

## Patentansprüche

1. Schallschutz-Verbundsystem für eine Raumbegrenzungsfläche (U), umfassend
(i) eine Boden-, Wand- oder Deckenverkleidung (V);
(ii) eine an die jeweilige Verkleidung (V) anschliessende, gegebenenfalls mit ihr verklebte, Dämpfungsschicht (D); und
(iii) eine an die Dämpfungsschicht (D) anschliessende Trittschalldämmschicht (S),
**dadurch gekennzeichnet, dass** die Dämpfungsschicht (D) aus wenigstens zwei äusseren Folienbahnen (A) als Deckschichten und wenigstens einer dazwischen liegenden inneren Folienbahn (I) als elastischem Kern besteht, wobei auf eine der beiden Deckschichten verzichtet werden kann, wenn deren Funktion von angrenzendem Material, beispielsweise durch die Oberfläche der Verkleidung (V), bereitgestellt werden kann, und wobei die innere Folienbahn eine Dichte von <1600 kg/m³, vorzugsweise von <1400 kg/m³, sowie einen Biegeverlustfaktor tan δ_{f} ≥ 0,08 aufweist und aus modifizierten Polyolefinen, insbesondere Very Low Density Polyolefinen, oder aus Weich-PVC besteht, und die Trittschalldämmschicht (S) entweder einen einachsigen Dehnverlustfaktor tan δ_{c}< 0,17 und eine dynamische Steifigkeit s' < 30MN/m³, oder einen einachsigen Dehnverlustfaktor tan δ_{c} ≥ 0,17 und eine dynamische Steifigkeit von s' ≥ 30 MN/m³ aufweist.

2. Schallschutz-Verbundsystem nach Anspruch 1,
**dadurch gekennzeichnet, dass** die innere Folienbahn (I) aus weichmacherhältigem Material besteht und wenigstens eine äussere Folienbahn (A) mindestens eine Schicht aus Barrierewerkstoff, vorzugsweise aus Ethylen-Vinylalkohol-Kopolymerisat (EVOH) oder Polyvinylidenchlorid (PVDC), enthält oder aus solchem besteht.

3. Schallschutz-Verbundsystem nach Anspruch 2,
**dadurch gekennzeichnet, dass** der Barrierewerkstoff (A1), zwischen zwei Schichten (A2) aus haftverbesserndem Werkstoff, wie z.B. einem Haftvermittler, und/oder einem lastverteilenden Werkstoff, wie z.B. Polyamid (PA), eingebettet ist.

4. Schallschutz-Verbundsystem nach einem der Ansprüche 1 bis 3, **dadurch gekennzeichnet, dass** wenigstens eine äussere Folienbahn (A) eine äussere Schicht (A3) aus einem verschweissbaren Werkstoff, vorzugsweise Polypropylen (PP), Polyethylen (PE), Polyethylenterephtalat (PET) oder Polyamid (PA), aufweist und/oder aus einem solchen besteht.

5. Schallschutz-Verbundsystem nach einem der Ansprüche 1 bis 4, **dadurch gekennzeichnet, dass** die innere Folienbahn (I) aus mehreren schwimmend angeordneten Schichten besteht, von denen vorzugsweise zumindest eine aus einem Block-Copolymer besteht.

6. Schallschutz-Verbundsystem nach einem der Ansprüche 1 bis 5, **dadurch gekennzeichnet, dass** die innere Folienbahn (I) eine Dicke von ≤ 3,0 mm, vorzugsweise zwischen 0,3 mm und 3,0 mm, aufweist.

7. Schallschutz-Verbundsystem nach einem der Ansprüche 1 bis 6, **dadurch gekennzeichnet, dass** die Trittschalldämmschicht (S) eine Dicke ≤ 4,0 mm, vorzugsweise zwischen 2,0 mm und 4,0 mm, besitzt.

## Claims

1. A sound-proof composite system for a space-limiting surface (U), comprising
(i) a floor, wall or ceiling cladding (V);
(ii) an insulating layer (D) adjacent to the respective cladding (V) and optionally adhesively bonded to it; and
(iii) a footfall damping layer (S) adjacent to the insulating layer (D),
**characterized in that** the insulating layer (D) consists of at least two outer sheets (A) as outer layers and at least one inner sheet (I) located in between as a resilient core, it being possible to dispense with one of the two outer layers if the function thereof can be performed by adjacent material, for example by the surface of the cladding (V), and the inner sheet having a density of < 1600 kg/m³, preferably of < 1400 kg/m³, and a flexural loss factor tan δ_{f} of ≥ 0.08 and consisting of modified polyolefins, in particular very low density polyolefins, or of flexible PVC, and the footfall damping layer (S) has either a monoaxial extension loss factor tan δ_{c} of < 0.17 and a dynamic rigidity s' of < 30 MN/m³ or a monoaxial extension loss factor tan δ_{c} of ≥ 0.17 and a dynamic rigidity s' of ≥ 30 MN/m³.

2. Sound-proof composite system according to Claim 1, **characterized in that** the inner sheet (I) consists of plasticizer-containing material, and at least one outer sheet (A) contains at least one layer of barrier material, preferably of ethylene/vinyl alcohol copolymer (EVOH) or polyvinylidene chlorine (PVDC), or consists thereof.

3. Sound-proof composite system according to Claim 2, **characterized in that** the barrier material (A1) is embedded between two layers (A2) of adhesion-improving material, such as, for example, an adhesion promoter, and/or a load-distributing material, such as, for example, polyamide (PA).

4. Sound-proof composite system according to any of Claims 1 to 3, **characterized, in that** at least one outer sheet (A) has an outer layer (A3) of a weldable material, preferably polypropylene (PP), polyethylene (PE), polyethylene terephtalate (PET) or polyamide (PA) and/or consists of such a material.

5. Sound-proof composite system according to any of Claims 1 to 4, **characterized, in that** the inner sheet (I) consists of a plurality of floating layers, preferably at least one of which consists of a block copolymer.

6. Sound-proof composite system according to any of Claims 1 to 5, **characterized in that** the inner sheet (1) has a thickness of ≤ 3.0 mm, preferably between 0.3 mm and 3.0 mm.

7. Sound-proof composite system according to any of Claims 1 to 6, **characterized in that** the footfall damping layer (S) has a thickness of ≤ 4.0 mm, preferably between 2.0 mm and 4.0 mm.

## Revendications

1. Système composite d'isolation acoustique pour une surface de limitation d'espaces (U), comprenant ;
(i) un habillage de sol, de mur, ou de plafond (V) ;
(ii) une couche d'amortissement (D) se raccordant à l'habillage (V) respectif, le cas échéant collée à celui-ci ; et
(iii) une couche d'isolation de bruit de piétinement (S), se raccordant à la couche d'amortissement (D),
**caractérisé en ce que** la couche d'amortissement (D) est composée d'au moins deux bandes de feuille (A) extérieures, en tant que couches de recouvrement, et d'au moins une bande de feuille intérieure (I) interposée, en tant que noyau élastique, sachant que l'on peut renoncer à l'une des deux couches de recouvrement si sa fonction peut être fournie par un matériau limitrophe, par exemple par la surface de l'habillage (V), et où la bande de feuille intérieure présente une masse volumique < 1600 kg/m³, de préférence < 1400 kg/m³, ainsi qu'un facteur de perte en flexion tan δ_{f} ≥ 0,08, et est composée de polyoléfines modifiées, en particulier de polyoléfines Very Low Density, ou de PVC souple, et la couche d'amortissement de bruit de piétinement (S) présente soit un facteur de perte en étirement sur un axe tan δ_{c} < 0,17 et une rigidité dynamique s' < 30 MN/m³, soit un facteur de perte en étirement sur un axe tan δ_{c} ≥ 0,17 et une rigidité dynamique s' ≥ 30 MN/m³.

2. Système composite d'isolation acoustique selon la revendication 1, **caractérisé en ce que** la bande de feuille intérieure (I) est formée d'un matériau contenant un plastifiant et contient au moins une bande de feuille (A) extérieure, d'au moins une couche en matériau formant barrière, de préférence en copolymérisat éthylène-alcool vinylique (EVOH) ou en polychlorure de vinylidène (PVDC), ou bien est composée d'un tel matériau

3. Système composite d'isolation acoustique selon la revendication 2, **caractérisé en ce que** le matériau formant barrière (A1) est intégré entre deux couches (A2) formées d'un matériau améliorant l'adhésion, tel que, par exemple, un agent adhésif, et/ou un matériau répartissait la charge, tel que, par exemple, du polyamide (PA).

4. Système composite d'isolation acoustique selon l'une des revendications 1 à 3, **caractérisé en ce qu'**au moins une bande de feuille (A) extérieure présente une couche extérieure (A3) formée d'un matériau soudable, de préférence du polypropylène (PP), du polyéthylène (PE), du téréphtalate de polyéthylène (PET) ou du polyamide (PA) et/ou est composée d'un tel matériau.

5. Système composite d'isolation acoustique selon l'une des revendications 1 à 4, **caractérisé en ce que** la bande de feuille intérieure (I) est composée d'une pluralité de couches disposées de façon flottante, dont de préférence au moins l'une est formée d'un copolymère séquencé.

6. Système composite d'isolation acoustique selon l'une des revendications 1 à 5, **caractérisé en ce que** la bande de feuille intérieure (I) présente une épaisseur ≤ 3,0 mm, de préférence dans la fourchette comprise entre 0,3 mm et 3,0 mm.

7. Système composite d'isolation acoustique selon l'une des revendications 1 à 6, **caractérisé en ce que** la couche d'amortissement de bruit de piétinement (S) présente une épaisseur ≤ 4,0 mm, de préférence dans la fourchette comprise entre 2,0 mm et 4,0 mm.
